# EUROPÄISCHE PATENTSCHRIFT

(11) **EP 2 128 198 B1**
(45) Veröffentlichungstag und Bekanntmachung des Hinweises auf die Patenterteilung: **21.01.2015**
(21) Anmeldenummer: 09153394.3
(22) Anmeldetag: 23.02.2009
(51) Int. Cl.: C08L 77/02

(54) **Verfahren zur Herstellung von Polyamiden unter Verwendung von Carbonsäuren und Amiden**
Process for the preparation of polyamides using carboxylic acids and amides
Procédé de préparation de polyamides en utilisant des acides carboxyliques et des amides

(30) Priorität: 30.05.2008 DE 102008026075
(43) Veröffentlichungstag der Anmeldung: 02.12.2009
(73) Patentinhaber: Lurgi Zimmer GmbH, 60439 Frankfurt am Main (DE)
(72) Erfinder: Otto, Brigitta, Dr., 14715 Milow (DE); Liehr, Hartmut, Dr., 16816 Buskow (DE)
(74) Vertreter: Meyer-Dulheuer, Karl-Hermann

(56) Entgegenhaltungen:
- EP-A1- 1 449 872
- WO-A2-2005/040262
- US-A1- 2004 068 089

## Beschreibung

Die Erfindung betrifft ein Verfahren zur Herstellung von Polyamiden wie Polycaprolactam unter Verwendung eines Mehrkomponentenadditivsystems, welches den Polykondensationsgrad sowie die molekulare Verteilungsbreite reguliert und gleichzeitig das Polymer während der Verarbeitung und die daraus hergestellten Produkte wie Textilfasern und Formmassen im Gebrauch gegen Hitze, Licht, Feuchtigkeit und Sauerstoff schützt. Des Weiteren kommen bei der Herstellung des Polyamids gegebenenfalls Comonomere zum Einsatz.

Es ist bekannt, in technischem Maßstab hergestellte Polymere durch verschiedene Additive in ihren Verarbeitungs- und Gebrauchseigenschaften gezielt an ihre Einsatzgebiete anzupassen. So werden Mono- und Dicarbonsäuren, wie Essigsäure, Benzoesäure oder auch Adipinsäure zugesetzt, um den Polykondensationsgrad von Polyamiden zu begrenzen bzw. das Polymer eigenschaftsstabil zu synthetisieren.

Neben diesen üblicherweise eingesetzten Kettenreglern gibt es weitere Additive, welche sowohl kettenregelnd wirken, als auch das Makromolekül gegen Licht und Hitze schützen. Zu diesen Substanzen gehören ester-, carboxyl-, sowie aminfunktionalisierte Phenole, Säuren und Amine. Diese Verbindungen werden an den Polymerkettenenden von Polyamiden fest gebunden und ermöglichen dadurch einerseits die Einstellung des Polymerisationgrades und andererseits die Stabilisierung des Polyamids im Verarbeitungsprozess und im Gebrauch.

Die Patentschrift DE 2237849 beschreibt die Verbesserung der thermischen und oxidativen Eigenschaften von Polyamiden durch Verwendung von Aminsalzen der 3.5-Dialkyl-4-hydroxiphenylcarbonsäure. Zur Licht- und Hitzestabilisierung polymerer Formmassen ist außerdem der Einsatz von sterisch gehinderten Aminen bekannt. Hierzu zählen auch 2,2,6,6- Tetraalkylpiperidyl- und Tetraalkylpiperidyloxy-Derivate wie sie in DE 4403084 A1 und EP 0466647 A1 gelehrt werden. Ebenso wird 4-Amino-2,2,6,6-tetramethylpiperidin (TAD) in einer Menge von bis zu 0,7 Gew.-% als Stabilisator-Additiv für PA-6 (DE 19537614 A1) verwendet. Aus DE 2040975 C sind außerdem Blends mit 0,01-5,0 Gew.-% 4-Aminopiperidin-Derivaten bekannt, und in US 56118909 wird TAD mit Polyamidoligomeren verknüpft, wobei im Polyamid TAD-Konzentrationen von 0,1 - 1,0 % eingestellt werden. Die internationale Anmeldung WO 2005/040262 A2 (EP1675901A2) lehrt eine Polyamidzusammensetzung, in der aromatische Amine (u.a. TAD und/oder S-EED) eine Wärme- bzw. Lichtstabilisierung bewirken. In WO 2006/002187 (EP 1773932 A1) wird die Herstellung einer Additivlösung von S-EED (N,N Bis-(tetramethylpiperidyl-4)-isophthalsäurediamid) und Adipinsäure sowie deren Einspeisung vor der Caprolactampolymerisation beschrieben. DE 198 54 421 B offenbart ein Verfahren, bei dem ein für das Schnellspinnen geeignetes Polyamid unter Verwendung von TAD, einem Diamin und einem Dialkylphenol hergestellt wird. Dabei sollen die NH2-Gruppenkonzentration 34 meq und das Produkt von NH2- und COOH-Gruppen weniger als 2000 meq/Kg betragen. Das europäische Patent EP 0818491 B1 handelt von witterungsstabilen Polyamiden mit einem ebenfalls polymergebundenen Stabilisierungssystem, bei dem neben TAD ein in 4-Stellung zur OH-Gruppe funktionalisiertes Dialkylphenol verwendet wird, wodurch die Beweglichkeit der verschiedenen Stabilisatormolekülreste eingeschränkt werden soll.

US 2004/068089 A1 beschreibt ein Verfahren zur Herstellung einer stabilisierten Zusammensetzung auf Basis von Polyamiden, die ein phosphorhaltiges, stabilisierendes Additiv enthält. Vorzugsweise enthält die Zusammensetzung mindestens ein weiteres Additiv, das vor oder während der Polymerisierung eingebracht wird und aus der Gruppe der sterisch gehinderten Phenolantioxidantien oder Lichtstabilisatoren mit einer sterisch gehinderten Amingruppe ausgewählt wird.

Die vorstehend beschriebenen Verfahren zur Hitze-, Licht-, Feuchtigkeit- und Sauerstoffstabilisierung von Polyamiden bei gleichzeitiger Regelung des Polykondensationsgrades haben den Vorteil, dass durch die Zugabe der stabilisierenden Additive bereits vor oder während der Polymerisation geschützte Verarbeitungsprodukte bereitgestellt werden, denen späterhin keine Stabilisatoren mehr zugemischt werden müssen. Durch die Bindung der Stabilisatormoleküle an den Enden der Polymerketten werden Stabilisatorverluste durch Verdampfen, Extraktion oder Migration verhindert und so deren nachhaltige Wirksamkeit sowohl bei der Herstellung als bei der Verarbeitung und im Gebrauch der Polyamide sichergestellt.

Die chemisch stabile Bindung der Stabilisatormoleküle an den Polymerkettenenden hat aber auch erhebliche Nachteile: Weil von der polyamidverarbeitenden Industrie Produkte mit immer höherem Schutzpotential gefordert werden, müssen relativ große Mengen (zum Teil mehr als 2 Gew.-%) der genannten Additive zugesetzt werden. Bei der polymergebundenen Stabilisierung führt die Kettenregelung dann jedoch oft zwangsläufig zu einem unerwünscht niedrigen Polymerisationsgrad. Viskosität und Molekulargewicht werden soweit herabgesetzt, dass die damit einhergehende Änderung der mechanischen Eigenschaften das mögliche Einsatzspektrum einengt.

Wenn Polyamid zu Textilfasern verarbeitet wird, wirken die geometrisch sperrigen Stabilisatormoleküle an den Kettenenden zusätzlich noch als Störstellen bei der Orientierung (Parallelisierung) der Kettenmoleküle während des Spinn- und Streckprozesses der Polymerfäden, vor allem wenn bei einer Hochgeschwindigkeitsverarbeitung geringe Materialverlustraten und hohe Qualitätsausbeuten realisiert werden sollen

Der Erfindung liegt nun die Aufgabe zu Grunde, ein Polyamid herzustellen, ohne dass die vorgenannte Problematik zu Tage tritt. Die chemischen und physikalischen Eigenschaften des Polymers sollen aufeinander abgestimmt und gleichermaßen befördert bzw. verbessert werden. Des Weiteren sollen der Polykondensationsgrad sowie die molekulare Verteilungsbreite reguliert und gleichzeitig das Polymer während der Verarbeitung und die daraus hergestellten Produkte wie Textilfasern und Formkörper im Gebrauch gegen Hitze, Licht, Feuchtigkeit und Sauerstoff geschützt werden. Weitere Aufgaben und Vorteile der vorliegenden Erfindung ergeben sich aus der nachfolgenden Beschreibung.

Die Aufgabe wird erfindungsgemäß gelöst durch ein Verfahren zur Herstellung eines Polyamids unter Verwendung von einem oder mehreren verschiedenen Arten von Monomeren und/oder Oligomeren, wobei es in Gegenwart der folgenden Additive durchgeführt wird:
-- eine oder mehrere Carbonsäuren in einer Menge von 0,01 - 3 Gew.-%, wobei es sich bei mindestens einer der Carbonsäuren um eine aromatische Dicarbonsäure handelt,
-- Bis-(2,2,6,6-tetramethylpiperidyl-4)- isophthalsäurediamid oder Bis-(2,2,6,6-tetramethylpiperidyl-4)-terephthalsäurediamid
-- eines oder mehrere alkylsubstituierte Phenole und/oder Thiole wobei die Menge an Diamid 0,01 - 3 Gew.-% und die Menge an Phenol und/oder Thiol 0,001 - 2 Gew.-% bezogen auf das gesamte Polyamid beträgt. Die Erfindung umfasst auch ein Polyamid beinhaltend eine oder mehrere verschiedene Arten von Monomeren wobei sie zusätzlich mindestens die oben genannten Additive, d.h. eine oder mehrere Carbonsäuren, eines oder mehrere Diamide und eines oder mehrere Phenole und/oder Thiole beinhaltet. Der Begriff "Polyamid" wird in der Anmeldung gleichbedeutend mit "Polyamidzusammensetzung" verwendet.

Unter dem Begriff "Additive" sind Hilfsstoffe bzw. Zusatzstoffe zu verstehen, die der Polyamidzusammensetzung (d.h. dem Polyamid) in geringen Mengen zugesetzt werden bzw. in dieser vorhanden sind, um deren Eigenschaften zu modifizieren bzw. zu verbessern. Sie werden in einem Anteil von 10 Gew.-% oder weniger bezogen auf die gesamte Polyamidzusammensetzung eingesetzt und sind nach Zugabe als Teil der Polyamidzusammensetzung anzusehen. Angaben zu Gew.-% beziehen sich, wenn kein Bezugspunkt genannt ist, generell auf das Gewicht der gesamten Polyamidzusammensetzung.

Demgegenüber wird das Wort "Monomer" in dieser Anmeldung für diejenigen Moleküle verwendet, welche im Wesentlichen die Monomer-Einheiten für das Polymer stellen, d.h. die Hauptmasse des Polyamids bzw. der Polyamidzusammensetzung ausmachen.

Neben den Monomeren und den genannten Additiven kann die Polyamidzusammensetzung jedoch noch weitere Stoffe beinhalten bzw. können im Rahmen des genannten Verfahrens weitere Stoffe beigegeben werden, die nach Zugabe ebenfalls als Teil der Polyamidzusammensetzung gelten.

Im genannten Verfahren bzw. der erwähnten Polyamidzusammensetzung kommen vorzugsweise folgende Mengen an Additiven zum Einsatz: Die Carbonsäuremenge beträgt 0,01 - 3 Gew.-%, die Menge an Diamid 0,01 - 3 Gew.-% und die Menge an Phenol und/oder Thiol 0,001 - 2 Gew.-%, wobei das Molverhältnis zwischen Carbonsäuren und Diamiden vorzugsweise zwischen 8:1 und 2:1 liegt.

Das erwähnte Verfahren und die genannte Polymerzusammensetzung sind dann von besonderem Interesse im Zusammenhang mit der vorliegenden Erfindung, wenn
-- mindestens eines der Diamide ein Molekül der allgemeinen Formel "R1 - NH - CO - R2 - CO - NH - R1" ist, wobei es sich *bei R1* um eine Alkyl-, substituierte oder nichtsubstituierte Benzyl-, Naphthyl-, Pyridyl-, und/oder Piperidylgruppe und *bei R2* um eine primäre, sekundäre oder tertiäre Alkylgruppe der Formel CₙH₂ₙ mit n=2-20, vorzugsweise n=2-12, besonders bevorzugt n=4-8 oder um ein aromatisches Ringsystem, bevorzugt einen Benzolring (C₆H₄) oder einen substituierten Benzolring (bspw. Terephthalsäure oder Isophthalsäure), handelt, wobei das Diamid ein Bis-(2,2,6,6-tetramethylpiperidyl-4)-isophthalsäurediamid oder ein Bis-(2,2,6,6-tetramethylpiperidyl-4)terephthalsäurediamid ist und
-- es sich bei mindestens einer der Carbonsäuren um eine aromatische Dicarbonsäure, besonders bevorzugt um Terephthalsäure handelt und
-- es sich bei mindestens einem Phenol vorzugsweise um 2,6-Di-tert.butyl-p-kresol handelt und/oder
-- es sich bei mindestens einem Thiol vorzugsweise um 2-Isopropylthiophenol oder Mercaptobenzimidazol handelt.

Die genannten Carbonsäuren sind bevorzugt aromatische bzw. aliphatische Dicarbonsäuren, insbesondere Phthalsäure, Isophthalsäure, Terephthalsäure oder Naphthalindicarbonsäure.
Bei den oben erwähnten Amiden handelt es sich um N,N-Bis-(tetramethylpiperidyl-4)-isophthalsäurediamid und N,N-Bis-(tetramethylpiperidyl-4)-terephthalsäurediamid.

Die genannten Phenole bzw. Thiole sind mit Vorteil Thiophenole und/oder andere Mercaptoverbindungen, insbesondere Di-tertiärbutyl-p-kresol, Isopropylthiophenol bzw. Mercaptobenzimidazol.

Vorzugsweise werden die genannten Additive im Wesentlichen gleichzeitig oder zeitnah dosiert, wobei eine Zugabe während oder vor dem Polymerisationsprozess bevorzugt ist.

Die gleichzeitige Zugabe ist dabei unter Anderem wegen des verringerten Aufwands in Bezug auf die notwendigen Gerätschaften wünschenswert.

Die erwähnte Polyamidzusammensetzung wird beispielsweise zur Herstellung von Formkörpern, Beschichtungen oder Polyamidfasern verwendet.

Bei der Herstellung von Formkörpern kann der Einsatz von Tricarbonsäuren wegen der durch sie ausgelösten Vernetzung von Vorteil sein.

Wie weiter oben beschrieben, wirken bei der Verarbeitung von Polyamid zu Textilfasern die geometrisch sperrigen Stabilisatormoleküle an den Kettenenden als Störstellen bei der Orientierung (Parallelisierung) der Kettenmoleküle während des Spinn- und Streckprozesses der Polymerfäden, vor allem wenn bei einer Hochgeschwindigkeitsverarbeitung geringe Materialverlustraten und hohe Qualitätsausbeuten realisiert werden sollen. Deshalb ist besonders in diesem Bereich die durch die Präsenz der genannten Additive erreichte Abstimmung der chemischen und physikalischen Eigenschaften des Polymers von großem Vorteil.

Mit dem offensichtlich synergetisch wirkenden Additivsystem ist es überraschenderweise gelungen, einen geringen Stabilisierungseinsatz mit einem hohen Stabilisierungspotential zu verbinden. Die Komponenten des Additivsystems scheinen sich in ihrer Wirkung sowohl zu verstärken als auch zu moderieren, wobei letzteres zur Folge hat, dass auch bei Zugabe von größeren Mengen an Additiven die weiter oben beschriebenen nachteiligen Effekte (z.B. auf die Viskosität) in wesentlich geringerem Umfang auftreten, als dies zu erwarten wäre.

Da die Erfindung insbesondere auch den Zusatz größerer Mengen an Additiven möglich macht, kann es vorteilhaft sein, wenn in Bezug auf das genannte Verfahren bzw. die genannte Polymerzusammensetzung die Summe aus Diamid und Phenol und/oder Thiol mehr als 0,7 Gew.-%, vorzugsweise 0,75 - 5 Gew.-% oder 0,8 - 4 Gew.-% oder 0,9 - 3 Gew.-% oder 1 - 2,5 Gew.-% oder 1,1 - 2 Gew.-% bezogen auf die gesamte Polymerzusammensetzung beträgt

Mit Hilfe des erfindungsgemäßen Additivsystems können auch aus stabilisierten Polyamiden mit sperrigen oder sterisch gehinderten Kettenenden, hochorientierte Spinnfäden hergestellt werden, die sich mit Abzugsgeschwindigkeiten von mehr als 5500 m/min verstrecken lassen, und zwar insbesondere dann, wenn das erfindungsgemäße Mehrkomponenten-Additivssystem zusammen mit einem Comonomeren, vorzugsweise einer comonomeren Aminosäure, verwendet wird.

Von besonderer Bedeutung ist ein wie oben beschriebenes Verfahren bzw. eine genannte Polyamidzusammensetzung also auch dann, wenn es sich bei der Polyamidzusammensetzung um ein Polyamid, vorzugsweise um Polycaprolactam handelt, welches bevorzugt ein Copolymer ist, d.h. Comonomere enthält, wobei es sich bei mindestens einem eingesetzten Monomeren vorzugsweise um Caprolactam und bei mindestens einem Comonomeren vorzugsweise um ein aromatisches Comonomer, insbesondere Aminobenzoesäure handelt. Das Comonomer wird dabei bevorzugt in einem Anteil von bis zu 1 Gew.-%, vorzugsweise 0,1 - 0,6 Gew.-%, eingesetzt.

Die besondere Wirkung des erfindungsgemäßen Systems versteht sich als duplizierter Mechanismus einer Kettenregelung, sowohl hinsichtlich des Polykondensationsgrades - wie allgemein üblich - als auch hinsichtlich der molekularen Verteilungsbreite (Polydispersität). Die Polydispersität (Index D) ist nach der Theorie von Flory das Gewichtsmittel des Molekulargewichtes dividiert durch das Zahlenmittel des Molekulargewichtes eines Polymeren und soll im Allgemeinen kleiner als 2, idealer Weise gleich 1 sein. Eine Einengung der Polydispersität entsteht als Folge einer Verminderung der hochmolekularen Fraktion.

Die Verwendung der genannten Additive, insbesondere bei den erwähnten Konzentrationen und Molverhältnissen und gegebenenfalls unter Einsatz der genannten Comonomere, erlaubt die Einengung der molekularen Verteilungsbreite, d.h. die Erfindung definiert erstmals die Mittel zur Erzielung eines solchen Effekts. Dies hat einen positiven Einfluss auf die viskoelastischen Eigenschaften der Polymerschmelze aufgrund einer reduzierten Schmelzeelastizität. Dadurch kompensiert das erfindungsgemäße Additivsystem die Nachteile der polymergebundenen Stabilisatormoleküle, die als sperrige Fremdmoleküleinheiten die Hochorientierung der Kettenmoleküle als Voraussetzung für optimale textil-physikalische Werte und hohe Produktionsausbeuten behindern.

Wie beschrieben, tritt die Wirkung des bereitgestellten Stabilisierungsverfahrens ein, wenn mit dem erfindungsgemäßen Additivsystem zu Beginn oder während des Polymerisationsprozesses, vorzugsweise gleichzeitig, bifunktionelle Carbonsäure-, Diamid- und vorzugsweise auch Thiophenol- und/oder Phenolmoleküle zugegeben werden.

Die Carbonsäuren wirken dabei bekanntermaßen kettenregelnd, und dienen somit der Einstellung des Polykondensationsgrades. Thioverbindungen wiederum erhöhen die Hitzestabilität, und zwar überraschenderweise ohne die verbesserte Polydispersität des Polymeren überhaupt oder nennenswert zu beeinträchtigen. Neben ihrer stabilisierenden Wirkung in Bezug auf Hitze, Licht dienen Phenole und Thiole außerdem zur Reduzierung der Menge an bzw. als Ersatz für andere Additive wie beispielsweise die kostenintensiveren Diamide.

Der erfindungsgemäße Effekt tritt überraschenderweise auch dann ein, wenn die Summe aller Additiveinheiten mehr als 2 Gew.-% beträgt und/oder wenn bei weniger als 0,5 Gew.-% der Summe der Dicarbonsäure/Diamid - Komponenten die eintretende Minderung der Licht-, Hitze- und Sauerstoffstabilität durch Zugaben von Thiophenol ausgeglichen wird. Das bedeutet, dass Thiophenole bereits während der Polymerisation zur Stabilisierung von Polyamiden durch Endgruppenbindung verwendet bzw. zugegeben werden können.

Im Folgenden wird die Erfindung anhand von Beispielen näher erläutert, wobei die Erfindung sich natürlich nicht auf die darin genannten Ausführungsformen beschränkt.

### Beispiele

Ein gerührter Autoklav wurde mit 2500g Caprolactam und 12,5g 4-Aminobenzoesäure, 2 Gew.-% demineralisiertem Wasser und dem Additivsystem in einem variablen Konzentrationsbereich der Komponenten beschickt (vgl. Tabelle 1).

Nach Inertisierung und dem Aufheizen der Prozessteilnehmer auf 260 Grad Celsius wurde ein autogener Druck von 4 bar über eine Stunde gehalten. Hieran schloss sich eine Entspannungsphase von 30 Minuten an, in welcher der Druck im Reaktor sukzessive auf Atmosphärenniveau reduziert wurde. Die Polymerisation zu Polyamid 6 erfolgte dann bei 260 Grad Celsius isotherm und drucklos innerhalb von 3 Stunden, bevor eine Vakuumphase bei 950 mbar über 120 min den Polymerprozess abschloss. Der Austrag der Polymerschmelze beendete den Batchprozess in dem mit Hilfe von Stickstoffüberdruck in ein Wasserbad ausgetragen und der erkaltete Polymerstrang anschließend granuliert und danach extrahiert und getrocknet wurde.

Die Charakterisierung des Polycaprolactams in Abhängigkeit der variierten Einwaage der Komponenten des Additivsystems ist für die einzelnen Beispiele in Tabelle 1 dargestellt.

**Tabelle 1**

| Die Mengen der eingesetzten Additivkomponenten sind sowohl in mmol/ kg als auch in Ma.-% (Wert in Klammern) bezogen auf Caprolactam angegeben. Der Anteil an 4-Aminobenzoesäure beträgt 0,1 Ma.-% bezogen auf Caprolactam (Ma.-% = Massenprozent). | | | | | | |
|---|---|---|---|---|---|---|
| | Essigsäure | Terephthalsäure | SEED | 2-Isopropylthiophenol | Mercaptobenzimidazol | 2,6-Ditertiärbutyl-p-Kresol |
| Beisp. 1 | 10 (0,06) | - | - | - | - | - |
| Beisp. 2 | - | 18 (0,298) | 3 (0,132) | - | - | - |
| Beisp. 3 | - | 24 (0,398) | 3 (0,132) | - | - | - |
| Beisp. 4 | - | 24 (0,398) | 3 (0,132) | 3 (0,049) | - | - |
| Beisp. 5 | - | 24 (0,398) | 3 (0,132) | - | 2 (0,030) | |
| Beisp. 6 | - | 24 (0,398) | 3 (0,132) | - | - | 2 (0,066) |

Die in der nachfolgenden Tabelle 2 aufgelisteten Kennwerte wurden wie folgt bestimmt:
Vor Durchführung der Analysen erfolgte die Trocknung der extrahierten PA - Chips während 24 Stunden bei 80 Grad Celsius unter Vakuum (kleiner 50 mbar).

Die relative Lösungsviskosität (LVᵣₑₗ) wurde anhand einer Lösung von 1 g Polymer in 100 ml 96 %iger Schwefelsäure bei 25 Grad Celsius bestimmt.

Zur Bestimmung der COOH-Endguppen (CEG) wurde das Polymer unter Rückfluß in Benzylalkohol gelöst und nach Abkühlung auf 120 Grad Celsius mit ethanolischer Kalilauge gegen Phenolphthalein als Indikator titriert.

Zur Bestimmung der NH2-Endgruppen (AEG) wurde das Polymer unter Rückfluß in einem Gemisch aus m-Kresol/Methanol mit ethanolischer Salzsäure (c= 0,02 mol/l) potentiometrisch titriert.

Zur Ermittlung der Polydispersität wurde wie folgt vorgegangen: PA 6 wurde in einer Konzentration von 3 g/l in Hexafluorisopropanol und 0,05 M Kaliumtrifluoracetat gelöst und nach Filtration der Lösung über ein 1,0 µm Einmalfilter filtriert und mittels Gelpermeationschromatographie (GPC) die Molmassenverteilung bestimmt. Die Auswertung erfolgt über einen Polymethylmethacrylat (PMMA)-Standard, wobei alle Molgewichte < 1000 abgeschnitten werden. Zur Bestimmung der Polydispersität D, dem Verhältnis Mw/Mn, wurden die gewichtsmittlere durch die zahlenmittlere Molmasse geteilt.

Der Gelbwert YI zur Beurteilung der Hitzestabilität wurde nach Trocknung und Vermahlung der Probe unter Stickstoff durch Reflexionsmessung mit einem Spektrophotometer mit einer Meßgeometrie von 45°/0° (Beleuchtung unter 45° / Beobachter unter 0°) und Standardbeleuchtung C/2° (Tageslicht / 2° Beobachter) gemessen. Die Farben werden als x,y, und z-Wert ermittelt und anschließend die Werte YI und bei Bedarf L, a und b-Wert nach HUNTER berechnet.

Zur Beurteilung der Spinnsicherheit wurden das Polymer zu einem Garn mit einem Titer 77/24 dtex/f versponnen und dabei die Schärfehler (SF) pro 10 000 m bei einer Wicklergeschwindigkeit von 5500 m vermessen.

**Tabelle 2**

| Die aufgeführten Werte sind Durchschnittswerte aus Versuchsreihen von jeweils mindestens 5 Einzelversuchen. | | | | | | |
|---|---|---|---|---|---|---|
| Beispiele / Eigenschaftswerte des Polycaprolactams | | | | | | |
| | LVrel | CEG | AEG | D | Color YI | SF |
| | | mmol/kg | mmol/kg | Mw/Mn | | |
| Beisp. 1 | 2,51 | 60 | 54 | 2,21 | 1,5 | 14 |
| Beisp. 2 | 2,50 | 62 | 48 | 1,92 | 0,9 | 5 |
| Beisp. 3 | 2,46 | 64 | 44 | 1,66 | 1,0 | 4 |
| Beisp. 4 | 2,46 | 63 | 44 | 1,69 | 0,6 | 6 |
| Beisp. 5 | 2,47 | 65 | 45 | 1,625 | 0,6 | 6 |
| Beisp. 6 | 2,46 | 66 | 46 | 1,78 | 0,8 | 5 |

## Patentansprüche

1. Verfahren zur Herstellung eines Polyamids unter Verwendung von einem oder mehreren verschiedenen Arten von Monomeren und/oder Oligomeren, **dadurch gekennzeichnet, dass** es in Gegenwart der folgenden Additive durchgeführt wird:
-- eine oder mehrere Carbonsäuren in einer Menge von 0,01 - 3 Gew.-%, wobei es sich bei mindestens einer der Carbonsäuren um eine aromatische Dicarbonsäure handelt,
-- Bis-(2,2,6,6-tetramethylpiperidyl-4)-isophthalsäurediamid oder Bis-(2,2,6,6-tetramethylpiperidyl-4)-terephthalsäurediamid,
-- eines oder mehrere alkylsubstituierte Phenole und/oder Thiole,
wobei die Menge an Diamid 0,01 - 3 Gew.-% und die Menge an Phenol und/oder Thiol 0,001 - 2 Gew.-% bezogen auf das gesamte Polyamid beträgt.

2. Verfahren nach Anspruch 1, **dadurch gekennzeichnet, dass** die Menge an Carbonsäure 0,01 - 3 Gew.-% beträgt und das Molverhältnis zwischen Carbonsäuren und Diamiden vorzugsweise zwischen 8:1 und 2:1 liegt.

3. Verfahren nach einem der vorangehenden Ansprüche, **dadurch gekennzeichnet, dass** die Summe aus Diamid und Phenol und/oder Thiol 1 - 2,5 Gew.-% und vorzugsweise 1,1 - 2 Gew.-%, bezogen auf das gesamte Polyamid beträgt.

4. Verfahren nach einem der vorangehenden Ansprüche, **dadurch gekennzeichnet, dass** es sich beim Polyamid, welches vorzugsweise ein Polycaprolactam ist, um ein Copolymer handelt, wobei es sich dann bei mindestens einem eingesetzten Monomeren vorzugsweise um Caprolactam und bei mindestens einem Comonomeren vorzugsweise um ein aromatisches Comonomer, insbesondere Aminobenzoesäure handelt.

5. Verfahren nach einem der vorangegangenen Ansprüche, **dadurch gekennzeichnet, dass**
-- es sich bei der aromatischen Dicarbonsäure um Terephthalsäure handelt und
-- es sich bei mindestens einem Phenol vorzugsweise um 2,6-Di-tert.butyl-p-kresol handelt und/oder
-- es sich bei mindestens einem Thiol vorzugsweise um 2-Isopropylthiophenol oder Mercaptobenzimidazol handelt.

6. Verfahren nach einem der vorangehenden Ansprüche, **dadurch gekennzeichnet, dass** die Additive im Wesentlichen gleichzeitig oder zeitnah dosiert werden, wobei eine Zugabe während oder vor dem Polymerisationsprozess bevorzugt ist.

7. Verfahren nach einem der vorangehenden Ansprüche, **dadurch gekennzeichnet, dass** das Polyamid zur Herstellung von Polyamidfasern, Formkörpern oder Beschichtungen verwendet wird.

8. Polyamid beinhaltend eine oder mehrere verschiedene Arten von Monomeren **dadurch gekennzeichnet, dass** es zusätzlich mindestens die folgenden Additive beinhaltet:
-- eine oder mehrere Carbonsäuren, wobei es sich bei mindestens einer der Carbonsäuren um eine aromatische Dicarbonsäure handelt,
-- Bis-(2,2,6,6-tetramethylpiperidyl-4)-isophthalsäurediamid und/oder Bis-(2,2,6,6-tetramethylpiperidyl-4)-terephthalsäurediamid,
-- eines oder mehrere alkylsubstituierte Phenole und/oder Thiole,
wobei die Menge an Diamid 0,01 - 3 Gew.-% und die Menge an Phenol und/oder Thiol 0,001 - 2 Gew.-% bezogen auf das gesamte Polyamid beträgt.

9. Polyamid nach Anspruch 8, **dadurch gekennzeichnet, dass** die Menge an Carbonsäuren 0,01 - 3 Gew.-% beträgt und das Molverhältnis zwischen den Carbonsäuren und den Diamiden vorzugsweise zwischen 8:1 und 2:1 liegt.

10. Polyamid nach einem der Ansprüche 8 - 9, **dadurch gekennzeichnet, dass** die Summe der Mengen an Diamid und Phenol und/oder Thiol 1 - 2,5 Gew.-% und vorzugsweise 1,1 - 2 Gew.-% bezogen auf das gesamte Polyamid beträgt.

11. Polyamid nach einem der Ansprüche 8 - 10, **dadurch gekennzeichnet, dass** es sich beim Polyamid, welches vorzugsweise ein Polycaprolactam ist, um ein Copolymer handelt, wobei es sich dann bei mindestens einem verwendeten Monomeren vorzugsweise um Caprolactam und bei mindestens einem verwendeten Comonomeren vorzugsweise um ein aromatisches Comonomer, insbesondere Aminobenzoesäure handelt.

12. Polyamid nach einem der Ansprüche 8 - 11, **dadurch gekennzeichnet, dass**
-- es sich bei der aromatischen Dicarbonsäure um Terephthalsäure handelt, und
-- es sich bei mindestens einem Phenol vorzugsweise um 2,6-Di-tert.butyl-p-kresol, handelt und/oder
-- es sich bei mindestens einem Thiol vorzugsweise um 2-Isopropylthiophenol oder Mercaptobenzimidazol handelt.

## Claims

1. A method for manufacturing a polyamide using one or more different types of monomers and/or oligomers, **characterized in that** it is carried out in the presence of the following additives:
- one or more carboxylic acids in a quantity of 0.01 - 3% by weight, wherein at least one of the carboxylic acids is an aromatic dicarboxylic acid,
- bis-(2,2,6,6-tetramethylpiperidyl-4)-isophthalic acid diamide or bis-(2,2,6,6-tetramethylpiperidyl-4)-terephthalic acid diamide,
- one or more alkyl-substituted phenols and/or thiols,
wherein the quantity of diamide is 0.01 - 3% by weight and the quantity of phenol and/or thiol is 0.001 - 2% by weight with respect to the total quantity of polyamide.

2. The method as claimed in claim 1, **characterized in that** the quantity of carboxylic acid is 0.01 - 3% by weight and the mole ratio between the carboxylic acids and the diamides is preferably in the range 8:1 to 2:1.

3. The method as claimed in one of the preceding claims, **characterized in that** the sum of the diamide and phenol and/or thiol is 1 - 2.5% by weight and preferably 1.1 - 2% by weight with respect to the total quantity of polyamide.

4. The method as claimed in one of the preceding claims, **characterized in that** the polyamide, which is preferably a polycaprolactam, is a copolymer whereupon at least one of the monomers employed is preferably caprolactam and at least one co-monomer is preferably an aromatic co-monomer, in particular aminobenzoic acid.

5. The method as claimed in one of the previous claims, **characterized in that**
- the aromatic dicarboxylic acid is terephthalic acid, and
- the at least one phenol is preferably 2,6-di-tert-butyl-p-cresol, and/or
- the at least one thiol is preferably 2-isopropylthiophenol or mercaptobenzimidazole.

6. The method as claimed in one of the preceding claims, **characterized in that** the additives are essentially dosed simultaneously or contemporaneously, wherein addition during or prior to the polymerization process is preferred.

7. The method as claimed in one of the preceding claims, **characterized in that** the polyamide is used for the manufacture of polyamide fibres, moulded articles or coatings.

8. A polyamide containing one or more different types of monomers, **characterized in that** in addition, it contains at least the following additives:
- one or more carboxylic acids, wherein at least one of the carboxylic acids is an aromatic dicarboxylic acid,
- bis-(2,2,6,6-tetramethylpiperidyl-4)-isophthalic acid diamide and/or bis-(2,2,6,6-tetramethylpiperidyl-4)-terephthalic acid diamide,
- one or more alkyl-substituted phenols and/or thiols,
wherein the quantity of diamide is 0.01 - 3% by weight and the quantity of phenol and/or thiol is 0.001 - 2% by weight with respect to the total quantity of polyamide.

9. The polyamide as claimed in claim 8, **characterized in that** the quantity of carboxylic acids is 0.01 - 3% by weight and the mole ratio between the carboxylic acids and the diamides is preferably in the range 8:1 to 2:1.

10. The polyamide as claimed in claim 8 or claim 9, **characterized in that** the sum of the quantities of diamide and phenol and/or thiol is 1 - 2.5% by weight and preferably 1.1 - 2% by weight with respect to the total quantity of polyamide.

11. The polyamide as claimed in one of claims 8 to 10, **characterized in that** the polyamide, which is preferably a polycaprolactam, is a copolymer whereupon at least one of the monomers employed is preferably caprolactam and at least one of the co-monomers employed is preferably an aromatic co-monomer, in particular aminobenzoic acid.

12. The polyamide as claimed in one of claims 8 to 11, **characterized in that**
- the aromatic dicarboxylic acid is terephthalic acid, and
- the at least one phenol is preferably 2,6-di-tert-butyl-p-cresol, and/or
- the at least one thiol is preferably 2-isopropylthiophenol or mercaptobenzimidazole.

## Revendications

1. Procédé de préparation d'un polyamide à partir d'un ou de plusieurs types de monomères et/ou oligomères différents, **caractérisé en ce qu'**il est mis en oeuvre en présence des additifs suivants :
- un ou plusieurs acides carboxyliques dans une quantité comprise entre 0,01 et 3 % en poids, au moins un desdits acides carboxyliques étant un acide dicarboxylique aromatique,
- le diamide d'acide bis-(2,2,6,6-tétraméthylpipéridyl-4)-isophtalique ou le diamide d'acide bis-(2,2,6,6-tétraméthylpipéridyl-4)-téréphthalique,
- un ou plusieurs phénols et/ou thiols substitués d'alkyle,
la quantité de diamide étant comprise entre 0,01 et 3 % en poids, et la quantité de phénol et/ou thiol étant comprise entre 0,001 et 2 % en poids, par rapport à la quantité globale dudit polyamide.

2. Procédé selon la revendication 1, **caractérisé en ce que** la quantité d'acide carboxylique est comprise entre 0,01 et 3 % en poids, et le rapport molaire entre les acides carboxyliques et les diamides est préférentiellement compris entre 8 : 1 et 2 : 1.

3. Procédé selon l'une des revendications précédentes, **caractérisé en ce que** la somme du diamide et du phénol et/ou du thiol est comprise entre 1 et 2,5 % en poids, et préférentiellement entre 1,1 et 2 % en poids, par rapport à la quantité globale dudit polyamide.

4. Procédé selon l'une des revendications précédentes, **caractérisé en ce que** ledit polyamide, qui correspond préférentiellement à un polycaprolactame, est un copolymère dont au moins un monomère constitutif est alors préférentiellement le caprolactame et dont au moins un comonomère est préférentiellement un comonomère aromatique, notamment l'acide aminobenzoïque.

5. Procédé selon l'une des revendications précédentes, **caractérisé en ce que**
- ledit acide dicarboxylique aromatique est l'acide téréphtalique, et
- au moins un phénol est préférentiellement le 2,6-di-tert.butyl-p-crésol, et/ou
- au moins un thiol est préférentiellement le 2-isopropylthiophénol ou le mercaptobenzimidazole.

6. Procédé selon l'une des revendications précédentes, **caractérisé en ce que** lesdits additifs sont sensiblement mis en oeuvre simultanément ou d'une manière rapprochée dans le temps, leur ajout ayant préférentiellement lieu pendant ou avant le processus de polymérisation.

7. Procédé selon l'une des revendications précédentes, **caractérisé en ce que** ledit polyamide est utilisé pour fabriquer des fibres de polyamide, des corps moulés ou des revêtements.

8. Polyamide contenant un ou plusieurs types de monomères différents, **caractérisé en ce qu'**il contient en outre au moins les additifs suivants :
- un ou plusieurs acides carboxyliques, au moins un desdits acides carboxyliques étant un acide dicarboxylique aromatique,
- le diamide d'acide bis- (2, 2, 6, 6-tétraméthylpipéridyl-4)-isophtalique et/ou le diamide d'acide bis-(2,2,6,6-tétraméthylpipéridyl-4)-téréphthalique,
- un ou plusieurs phénols et/ou thiols substitués d'alkyle,
la quantité de diamide étant comprise entre 0,01 et 3 % en poids, et la quantité de phénol et/ou thiol étant comprise entre 0,001 et 2 % en poids, par rapport à la quantité globale dudit polyamide.

9. Polyamide selon la revendication 8, **caractérisé en ce que** la quantité d'acides carboxyliques est comprise entre 0,01 et 3 % en poids, et le rapport molaire entre les acides carboxyliques et les diamides est préférentiellement compris entre 8 : 1 et 2 : 1.

10. Polyamide selon l'une des revendications 8 à 9, **caractérisé en ce que** la somme des quantités de diamide et de phénol et/ou thiol est comprise entre 1 et 2,5 % en poids, et préférentiellement entre 1,1 et 2 % en poids, par rapport à la quantité globale dudit polyamide.

11. Polyamide selon l'une des revendications 8 à 10, **caractérisé en ce que** ledit polyamide, qui correspond préférentiellement à un polycaprolactame, est un copolymère dont au moins un monomère constitutif est alors préférentiellement le caprolactame et dont au moins un comonomère constitutif est préférentiellement un comonomère aromatique, notamment l'acide aminobenzoïque.

12. Polyamide selon l'une des revendications 8 à 11, **caractérisé en ce que**
- ledit acide dicarboxylique aromatique est l'acide téréphtalique, et
- au moins un phénol est préférentiellement le 2,6-di-tert.butyl-p-crésol, et/ou
- au moins un thiol est préférentiellement le 2-isopropylthiophénol ou le mercaptobenzimidazole.
